# EUROPEAN PATENT SPECIFICATION

(11) **EP 3 971 451 B1**
(45) Date of publication and mention of the grant of the patent: **18.09.2024**
(21) Application number: 20826736.9
(22) Date of filing: 16.06.2020
(51) Int. Cl.: F16H 61/02, B60W 30/18, F16H 61/12

(54) **GEAR DETERMINATION METHOD AND SYSTEM, AND VEHICLE**
VERFAHREN UND SYSTEM ZUR GETRIEBEBESTIMMUNG UND FAHRZEUG
PROCÉDÉ ET SYSTÈME DE DÉTERMINATION DE VITESSE ET VÉHICULE

(30) Priority: 17.06.2019 CN 201910523677
(43) Date of publication of application: 23.03.2022
(73) Proprietor: Great Wall Motor Company Limited, Baoding, Hebei 071000 (CN)
(72) Inventor: WANG, Xiaojie, Baoding, Hebei 071000 (CN); XU, Guangjie, Baoding, Hebei 071000 (CN); ZHOU, Bing, Baoding, Hebei 071000 (CN); LI, Weitao, Baoding, Hebei 071000 (CN)
(74) Representative: dompatent von Kreisler Selting Werner - Partnerschaft von Patent- und Rechtsanwälten mbB
(86) International application number: PCT/CN2020/096348
(87) International publication number: WO 2020/253677

(56) References cited:
- CN-A- 103 883 727
- CN-A- 103 925 358
- CN-A- 106 090 203
- CN-A- 106 090 203
- CN-A- 107 120 426
- CN-A- 107 791 968
- CN-A- 109 296 747
- CN-A- 110 043 656
- JP-A- 2019 056 390
- KR-A- 20140 066 373
- US-A1- 2015 198 239
- US-A1- 2015 198 239
- US-A1- 2018 043 877

## Description

### FIELD

The present disclosure relates to the technical field of vehicle control, in particular to a gear determination method, system and vehicle.

### BACKGROUND

In electric vehicles, especially pure electric vehicles, an entire-vehicle controller is a core component of the entire vehicle, and coordinates, optimizes, matches and controls related controllers such as a motor controller, a battery controller and an electric power steering system, so that the relevant controllers maximize their respective functions. A required torque outputted by the entire-vehicle controller needs to depend on a logic gear state. Therefore, a gear control strategy is particularly important in the control of the entire electric vehicle. An improper gear control strategy will cause great harm.

However, currently, the gear control strategy is extremely easy to switch to an improper gear when an entire-vehicle state changes, resulting in a serious vehicle accident. Therefore, how to avoid the above situation has become an urgent problem to be solved at this stage.

CN106090203 A discloses an electronic gear position control system. The electronic gear position control system comprises an electronic gear shifter and a whole car controller. The electronic gear shifter executes the gear shifting operation of a user, obtains a first target gear position corresponding to the gear shifting operation, and returns to the default initial position after gear shifting operation is finished. The whole car controller obtains the current state information of a car, determines that the gear position actually executed by the car currently is the first target gear position when the state information is matched with the first target gear position, and sends the actually executed first target gear position to the electronic gear shifter to be displayed. When the state information is not matched with the first target gear position, a second target gear position actually executed by the car currently is judged according to the state information and the first target gear position, and the actually executed second target gear position is sent to the electronic gear shifter to be displayed.

JP2019056390 A discloses a shift range switching process wherein an ECU takes a diagnosis of abnormality on a power circuit on condition that a vehicle is traveling in a D-range mode, a hydraulic controller controls, when a shift range operation detection part detects an N range operation during the diagnosis of abnormality, an output state of a control valve to place a T/M in a power cutoff state, and an ACT switches, after the diagnosis of abnormality is completed, the position of a manual valve to a position corresponding to an N range.

US 20150198239A1 discloses a control system for a hybrid powertrain including a transmission and a hybrid system. The control system includes a memory unit, and a controller. The memory unit is configured to store at least one shift map therein. The controller is coupled to the memory unit, the transmission, and the hybrid system. The controller is configured to receive an operating state of the transmission and the hybrid system. The controller is further configured to determine if the received operating state meets a gearshift criteria with the at least one shift map, and trigger one or more gearshifts in the transmission based on the determination.

US 20180043877A1 discloses a system and method for controlling a hybrid electric vehicle using a driving tendency. The method includes determining a driving tendency level based on data to determine a driving tendency of a driver and determining a target engine torque using an engine torque map based on a vehicle speed and a required torque. Whether the driving tendency level corresponds to a predetermined level is determined as well as whether the required torque is equal to or greater than a torque that corresponds to an optimal operating point of an engine when the driving tendency level corresponds to the predetermined level. The target engine torque is then adjusted when the required torque is equal to or greater than the torque that corresponds to the optimal operating point of the engine.

### SUMMARY

In view of this, the present invention proposes a gear determination method, a system and a vehicle, to realize the gear determination under an entire-vehicle state, a change situation of the entire-vehicle state and a change situation of a shifter state.

To achieve the above objective, a gear determination method according to claim 1 and a gear determination system according to claim 8 are provided.

Preferred embodiments of the present invention are laid down in the dependent claims.

According to the present invention, a vehicle according to claim 10 is also provided.

Compared with the conventional technology, the gear determination method, system, and vehicle according to the present invention can obtain a first actual shift strategy corresponding to an actual entire-vehicle state and an actual shifter state when the entire-vehicle state is a first fixed state and the shifter state is a second fixed state; and obtain a second actual shift strategy corresponding to the change situation of the actual entire-vehicle state and/or the change situation of the actual shifter state when the entire-vehicle state is the first change state and/or the actual shifter state is the second change state. According to the present invention, the current gear of the vehicle can be determined based on the first actual shift strategy and the second actual shift strategy, and the current gear can be ensured to be a reasonable gear, thereby avoiding the unreasonable logical gear control in the conventional technology and reducing the probability of serious accidents in vehicles.

Other features and advantages of the present invention will be described in detail in the following specific embodiments.

### BRIEF DESCRIPTION OF THE DRAWINGS

The drawings constituting a part of the present invention are used to provide a further understanding of the present invention, and the exemplary embodiments and descriptions of the present invention are used to explain the present invention, and do not constitute an improper limitation of the present invention, which is defined by the appended claims.
Figure 1 is a flowchart of a gear determination method according to an embodiment of the present invention;
Figure 2A is a flowchart of a gear determination method according to an embodiment of the present invention;
Figure 2B is a flowchart of a further improved gear determination method in a case that the actual shifter state in Figure 2A is a fault state in an embodiment of the present invention;
Figure 2C is a flowchart of a further improved gear determination method in a case that the actual shifter state in Figure 2A is a normal state in an embodiment of the present invention;
Figure 3 is a flowchart of gear determination in a case that the entire-vehicle state changes according to an embodiment of the present invention;
Figure 4A is a flowchart of gear determination in a case that the shifter state changes according to an embodiment of the present invention;
Figure 4B is a flowchart of a further improved gear determination method with respect to the step of "determine a current gear of the vehicle based on the vehicle speed value and the actual gear in the normal state prior to the fault state" in Figure 4A according to an embodiment of the present invention;
Figure 5 is a flowchart of a gear determination method according to an embodiment of the present invention; and
Figure 6 is a structural topological block diagram of a gear determination system according to an embodiment of the present invention.

Description of reference signs:
10 refers to entire-vehicle state controller, 20 refers to electronic shifter,
30 refers to gear control module.

### DETAILED DESCRIPTION OF EMBODIMENTS

It should be noted that, embodiments in the present invention and features in the embodiments may be combined with each other, wherein the present invention is defined by the appended claims.

Before describing the present invention in detail, a vehicle mentioned in the following embodiments is briefly introduced. The following vehicle refers to a pure electric vehicle or a hybrid vehicle, but is not used to limit the type of the vehicle. It should also be noted that the gear determination solution according to the present invention is made for one change situation, and the present invention does not involve a gear determination solution made for multiple states changing at the same time. Hereinafter, the present invention will be described in detail through embodiments. In the following embodiments, terms "first" and "second" are only used for distinction, but are not used to indicate an order.

### First embodiment

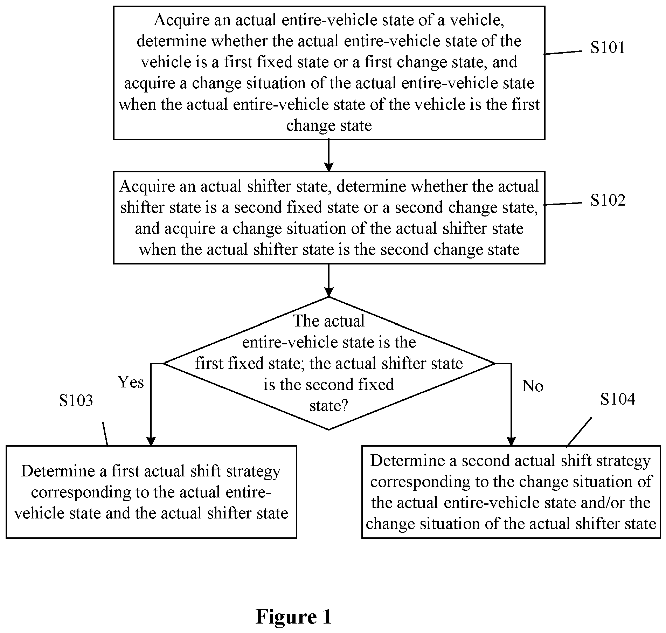

Figure 1 is a flowchart of a gear determination method according to an embodiment, and the method is mainly used to determine which gear a vehicle is in and set a different shift strategy according to different vehicle states and different shifter states. The specific method is as follows. The gear determination method includes the following steps.

In step S101, an actual entire-vehicle state of a vehicle is acquired, it is determined whether the actual entire-vehicle state is a first fixed state or a first change state, and a change situation of the actual entire-vehicle state is acquired when the actual entire-vehicle state of the vehicle is the first change state.

Step S101 can achieve the acquisition of the actual entire-vehicle state of the vehicle, and the actual vehicle state of the vehicle may be a low-voltage state, a charging state or a high-voltage state. Correspondingly, the change situation of the actual entire-vehicle state may refer to a transition among the low-voltage state, the charging state and the high-voltage state. The first change state does not always need to be acquired, but is acquired according to an actual need. The change situation of the actual entire-vehicle state is acquired when the actual entire-vehicle state of the vehicle is the first change state.

In step S102, an actual shifter state is acquired, it is determined whether the actual shifter state is a second fixed state or a second change state, and a change situation of the actual shifter state is acquired when the actual shifter state is the second change state.

Step S 102 can obtain the actual shifter state, and the shifter state may be a fault state or a normal state. The state may be identified by a recognizer. The fault state indicates that the shifter has a certain problem and cannot work normally, and on the contrary, the normal state indicates that the shifter can work normally. In addition, for the change situation of the actual shifter state mentioned in step S 102, since the actual shifter state may be one of the above two states, the change situation refers to a mutual change between the above two states. When it is determined that there is no change between the two states, it is not required to collect the change situation of the actual shifter state.

Specifically, an actual state of the vehicle and its change state may be acquired through steps S101 and S 102 described above. Finally, a most suitable gear is determined, to improve driving safety.

After obtaining the above data, the following step is further included in this embodiment.

In step S103, in a case that the actual entire-vehicle state is the first fixed state and the actual shifter state is the second fixed state, a first actual shift strategy corresponding to the actual entire-vehicle state and the actual shifter state is determined according to a preset first shift strategy set for reflecting shift strategies respectively corresponding to respective entire-vehicle states under the first fixed state and for reflecting shift strategies respectively corresponding to respective shifter states under the second fixed state, and a current gear of the vehicle is determined based on the first actual shift strategy.

The above-mentioned solution is used to obtain a shift strategy when the actual entire-vehicle state and the actual shifter state are both not changed. Since there are many entire-vehicle states and many shifter states, and each state corresponds to a shift strategy, the above first shift strategy set including various shift strategies is specially designed so as to realize the centralized management of shift strategies. This solution aims to distinguish the case where the entire-vehicle state and the shifter state are both fixed states from the case where any one or two of the entire-vehicle state and the shifter state are change states. Different shifting strategy sets are considered in the two different cases.

In step S 104, in a case that the actual entire-vehicle state is the first change state and/or the actual shifter state is the second change state, a second actual shift strategy corresponding to the change situation of the actual entire-vehicle state and/or the change situation of the actual shifter state is determined according to a preset second shift strategy set for reflecting shift strategies respectively corresponding to change situations of respective entire-vehicle states under the first change state and/or for reflecting shift strategies respectively corresponding to change situations of respective shifter states under the second change state, and a current gear of the vehicle is determined based on the second actual shift strategy.

The second shift strategy set and the first shift strategy set described above belong to different sets in consideration of the two different cases. The second shift strategy set includes shift strategies corresponding to change situations. For example, the change situations refer to the mutual change among the low-voltage state, the charging state and the high-voltage state of the actual entire-vehicle state, as well as the mutual change between the fault state and the normal state of the actual shifter state. Each change situation corresponds to one second shift strategy, and all second shift strategies are combined together to form the second shift strategy set which contains shift strategies corresponding to all change situations.

Through the above embodiments, when the entire-vehicle state and the shifter state are both fixed, the current gear of the vehicle may be determined by the first shift strategy; when the entire-vehicle state and/or the shifter state is changed, the current gear of the vehicle may be determined by the second shift strategy. The gear can be ensured to be at the most reasonable position based on the actual sets, which ensures the safety of the vehicle.

The first embodiment illustrates that the entire-vehicle state and the shifter state each may have a fixed state and a change state, specifically including the first fixed state, the second fixed state, the first change state and the second change state. The gear may be determined based on the first shift strategy set and the second shift strategy set respectively under the two states. In the following, the second embodiment is used to specifically describe gear determination when the entire-vehicle state and the shifter state are both fixed states.

### Second embodiment

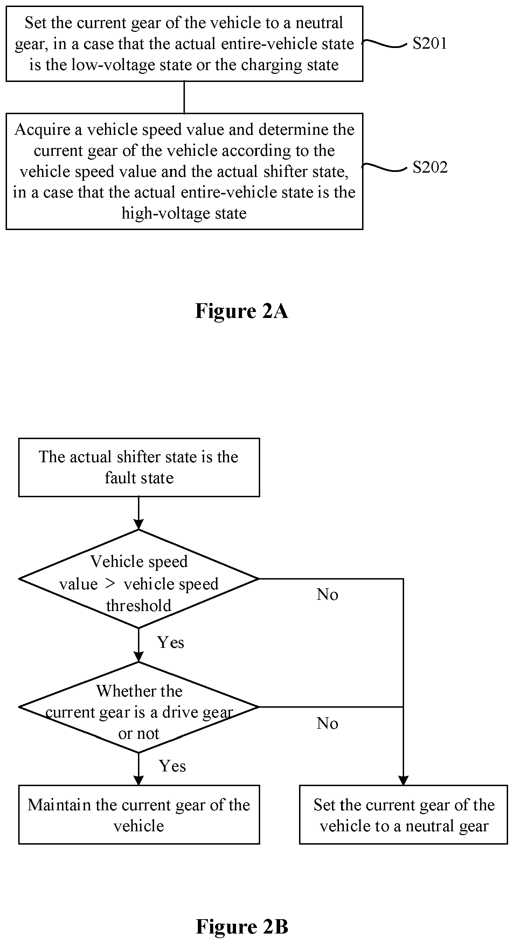

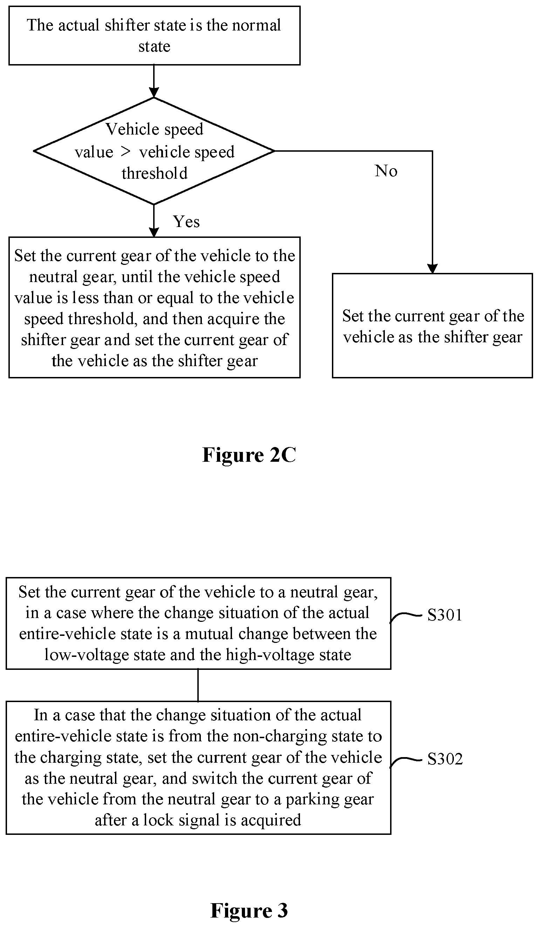

Figure 2Ais a further detailed description of the first actual shift strategy on basis of the first embodiment. All first actual shift strategies should be included in the first shift strategy set. Figure 2B and Figure 2C are further improvements made on the basis of Figure 2A. Specifically, Figure 2B and Figure 2C are further improvements on step "determining the current gear of the vehicle according to the vehicle speed value and the actual shifter state" in Figure 2A. Specifically, Figure 2B is an improvement made under a case where the actual shifter state is the fault state, and Figure 2C is an improvement made under a case where the actual shifter state is the normal state. In this embodiment, the respective entire-vehicle states of the vehicle may include a low-voltage state, a charging state or a high-voltage state. The respective shifter states may include: a fault state in which the shifter is identified to be failed, and a normal state in which the shifter is identified to be normal.

As shown in Figure 2A, in the second embodiment, the first actual shift strategy is configured as follows.

In step S201, the current gear of the vehicle is set to a neutral gear, in a case that the actual entire-vehicle state is the low-voltage state or the charging state.

Such design can prevent the vehicle from being driven by misoperation under the low-voltage state or the charging state. Once the vehicle is driven, it will cause serious consequences. Such setting can effectively improve the vehicle safety.

In step S202, in a case that the actual entire-vehicle state is the high-voltage state, a vehicle speed value is acquired and the current gear of the vehicle is determined according to the vehicle speed value and the actual shifter state.

The vehicle speed value is acquired in real time, and the vehicle speed value in step S202 is acquired when the actual entire-vehicle state is a high-voltage state. The vehicle speed value is mainly used to determine the current gear of the vehicle in cooperation with the actual shifter state.

Further, the step of determining the current gear of the vehicle according to the vehicle speed value and the actual shifter state may specifically performed as follows. As shown in Figure 2B, the actual shifter state is a fault state. Next, the vehicle speed value is compared with a preset vehicle speed threshold. If the vehicle speed value is greater than the vehicle speed threshold, and the current gear of the vehicle is a drive gear, the current gear of the vehicle is maintained. If it is determined that the vehicle speed value is greater than the preset vehicle speed threshold, and the current gear of the vehicle is a neutral gear or a reverse gear, the current gear of the vehicle is set to the neutral gear. If it is determined that the vehicle speed value is less than or equal to the preset vehicle speed threshold, the current gear of the vehicle is set to the neutral gear. As shown in Figure 2C, the actual shifter state is a normal state, and next the vehicle speed value is compared with the preset vehicle speed threshold. If the vehicle speed value is less than or equal to the preset vehicle speed threshold, it indicates that the vehicle is in a driving state with a low speed. At this time, a shifter gear is acquired and the current gear of the vehicle is set as the shifter gear. If the vehicle speed value is greater than the preset vehicle speed threshold, the current gear of the vehicle is set to the neutral gear, until the vehicle speed value is less than or equal to the vehicle speed threshold, then the shifter gear is acquired and the current gear of the vehicle is set as the shifter gear.

When the actual shifter state is the normal state and the vehicle speed value is less than or equal to the preset vehicle speed threshold, the static shift logic under a high voltage may be used to shift a gear (as described above). When the actual shifter state is the normal state and the vehicle speed value is greater than the preset vehicle speed threshold, the dynamic shift logic under a high voltage is used to shift a gear (as described above). The above two shifting logics correspond to different cases and are selected according to the acquired vehicle speed value. In addition, the shifter gear actually refers to the gear in which the shifter is identified to be located, and the shifter gear may be a neutral gear, a reverse gear, a drive gear, and the like, and is mainly used to indicate the driver's driving intention.

Through the above embodiments, the current gear of the vehicle may be determined under the fixed states, thus to ensure a reasonable shift under the fixed states of the vehicle and acquire a reasonable current gear.

The second embodiment specifically describes the gear determination under a case where the entire-vehicle state and the shifter state are both fixed states. Hereinafter, the third embodiment will describe the gear determination under a case where the entire-vehicle state changes.

### Third embodiment

Figure 3 illustrates the gear determination under a case where the entire-vehicle state of the vehicle changes. The third embodiment is a further improvement made on the basis of the first embodiment, and is mainly used to introduce the specific determination method of the second actual shift strategy. In this embodiment, the change situations of respective entire-vehicle states include: the mutual change between the low-voltage state and the high-voltage state, and the transition from the non-charging state to the charging state.

As shown in Figure 3, the second actual shift strategy may be configured as follows.

In step S301, the current gear of the vehicle is set to a neutral gear, in a case where the change situation of the actual entire-vehicle state is a mutual change between the low-voltage state and the high-voltage state.

In step S302, in a case that the change situation of the actual entire-vehicle state is from the non-charging state to the charging state, the current gear of the vehicle is set as the neutral gear, and the current gear of the vehicle is switched from the neutral gear to a parking gear after a lock signal is acquired.

The mutual change between a low-voltage state and a high-voltage state includes a change from a low-voltage state to a high-voltage state, or a change from a high-voltage state to a low-voltage state. In both cases, the shifter gear is not considered, and the current gear of the vehicle is directly set as the neutral gear regardless of which gear the shifter is in. In addition, in step S302, the current gear of the vehicle may be switched from the neutral gear to the parking gear to realize stop and lock. The way of switching into the parking gear described above may be that: a request for the locked state is sent to a parking controller, the request is sent for only one cycle, and the parking controller sends a lock signal to control the current gear of the vehicle to switch from the above neutral gear into the parking gear.

Through the above embodiments, it is possible to avoid unexpected movement of the vehicle during charging, avoid abnormal operation during the transition from the non-charging state to the charging state, and avoid misoperation which will cause danger.

### Fourth embodiment

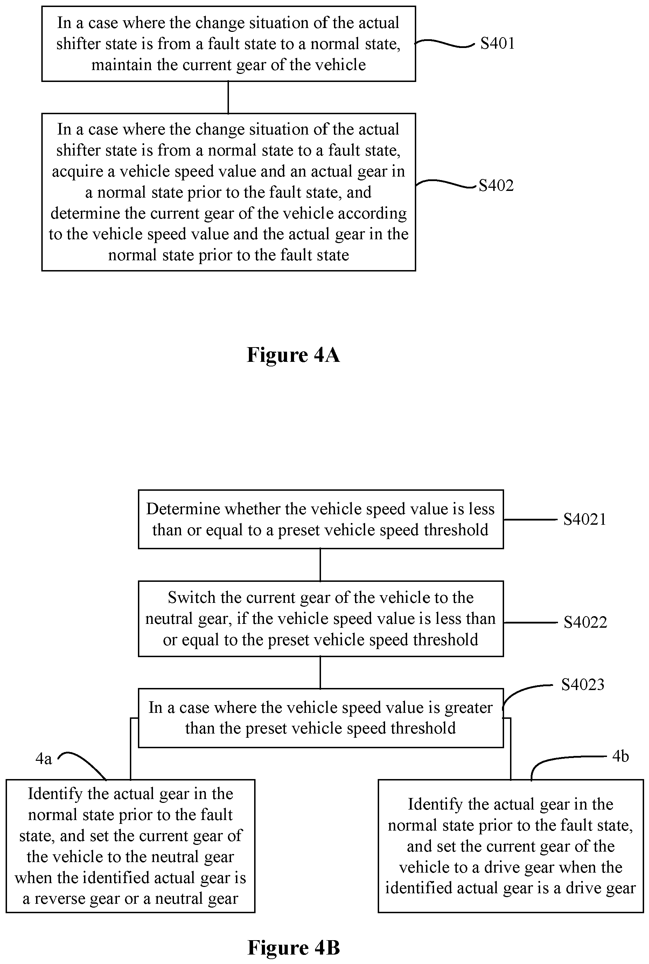

Figure 4A illustrates the gear determination under a case where the shifter state changes. Figure 4B is an illustration of further optimization and improvement made on step of "determining the current gear of the vehicle according to the vehicle speed value and the actual gear in a normal state prior to the fault state" of Figure 4A. The fourth embodiment is a further improvement made on the basis of the first embodiment, and is mainly used to introduce the specific determination method of the second actual shift strategy. In this embodiment, the change situations of respective shifter states include: a change from a fault state to a normal state and a change from a normal state to a fault state.

As shown in Figure 4A, the second actual shift strategy may be configured as follows.

In step S401, the current gear of the vehicle is maintained, in a case where the change situation of the actual shifter state is from a fault state to a normal state.

In above step S401, when the shifter state is recovered from the fault state, it is found that the shifter gear has changed. At this time, the current gear of the vehicle is kept unchanged. No matter which gear the vehicle is in under the fault state, once the normal state is restored, it does not consider whether the driver has operated or not, and the gear under the fault state is still maintained.

The above step S401 is mainly used to avoid the change of the shifter gear and entering into an unexpected gear due to non-driver operations, so as to avoid danger.

In step S402, in a case where the change situation of the actual shifter state is from a normal state to a fault state, a vehicle speed value is acquired. The vehicle speed value is acquired in real time when the actual shifter state is changed from a normal state to a fault state. Moreover, an actual gear in a normal state prior to the fault state is acquired, and the current gear of the vehicle is determined according to the vehicle speed value and the actual gear in the normal state prior to the fault state.

Further, as shown in Figure 4B, in step S402, the current gear of the vehicle may be determined according to the vehicle speed value and the actual gear in the normal state prior to the fault state, and the specific determination way will be described as follows.

In step S4021, it is determined whether the vehicle speed value is less than or equal to a preset vehicle speed threshold. As described above, the vehicle speed value is acquired in real time when the actual shifter state is changed from a normal state to a fault state.

In step S4022, the current gear of the vehicle is switched to the neutral gear, if the vehicle speed value is less than or equal to the preset vehicle speed threshold.

In step S4022, actually the shifter is identified to be failed at a low vehicle speed. In this case, the current gear of the vehicle is directly switched to the neutral gear, so as to avoid driving the vehicle when the driver's intention cannot be determined, thereby ensuring the safety of the entire vehicle. For example, when the vehicle is reversing, the shifter is found to be failed and the shifter gear cannot be known, then the current gear of the vehicle is directly set to the neutral gear.

In step S4023, there are the following cases if the vehicle speed value is greater than the preset vehicle speed threshold.

In step 4a), an actual gear in a normal state prior to the fault state is identified, and in a case that the actual gear in the normal state prior to the fault state is a reverse gear or a neutral gear, the current gear of the vehicle is set to the neutral gear. In step 4b), an actual gear in a normal state prior to the fault state is identified, and in a case that the actual gear in the normal state prior to the fault state is a drive gear, the current gear of the vehicle is set to the drive gear.

In step S4023, the step 4a) is to avoid driving the vehicle when the driver's intention cannot be determined at a high speed, so as to ensure the safety of the entire vehicle, and step 4b) is to avoid unexpected slowdown of the vehicle at a high speed (the vehicle speed is greater than the preset vehicle speed threshold) and affecting safety.

Through the above- embodiments, the most reasonable gear can be outputted in a case where the shifter state changes, ensuring the safety of the entire vehicle, avoiding changes in the shifter gear caused by non-driver operations, and avoiding entry of an unexpected gear.

### Fifth embodiment

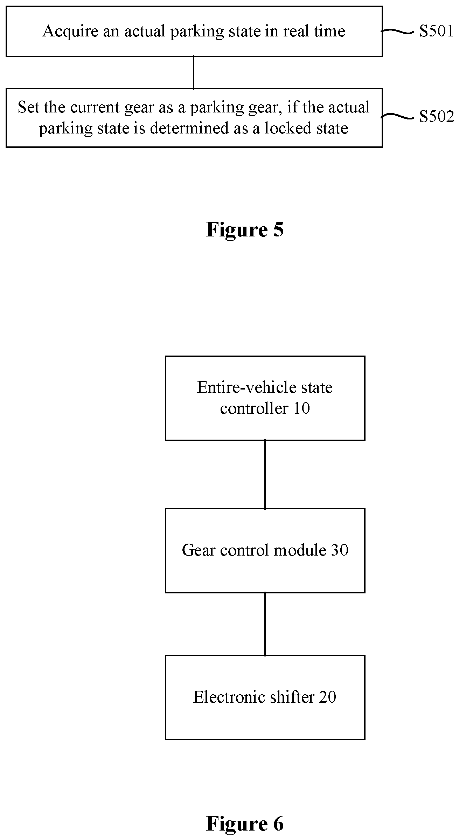

Figure 5 is a flow chart of the fifth embodiment. The fifth embodiment may be combined with the above-mentioned first to fourth embodiments or may exist independently without being combined with them. In this embodiment, the parking state may be a locked state or an unlocked state. The vehicle cannot be driven under the locked state, and the first embodiment to the fourth embodiment described above may be implemented under the unlocked state.

As shown in Figure 5, the gear determination method may include the following steps.

In step S501, an actual parking state is acquired in real time.

In step S502, the current gear is set as a parking gear, if the actual parking state is determined as a locked state.

The actual parking state is acquired from an electronic parking controller. When the actual parking state is the locked state, the current gear is directly set as the parking gear. Otherwise, the first embodiment to fourth embodiment may be implemented.

Through the above method, the vehicle can be locked, thus to avoid the abnormal movement of the vehicle and improve the safety of the vehicle.

### Sixth embodiment

Figure 6 is a structural topological block diagram of a gear determination system according to the sixth embodiment. The main functions of the entire-vehicle state controller 10, the electronic shifter 20, and the gear control module 30 in Figure 6 will be described as follows. In addition, an identification module for the electronic shifter 20 is further provided in this embodiment and is used for identifying a gear of the electronic shifter 20.

As shown in Figure 6, the gear determination system includes:
an entire-vehicle state controller 10, configured to acquire an actual entire-vehicle state of a vehicle, determine whether the actual entire-vehicle state of the vehicle is a first fixed state or a first change state, and acquire a change situation of the actual entire-vehicle state when the actual entire-vehicle state of the vehicle is the first change state;
an electronic shifter 20, configured to acquire an actual shifter state, determine whether the actual shifter state is a second fixed state or a second change state, and acquire a change situation of the actual shifter state when the actual shifter state is the second change state; and
a gear control module 30, configured to:
   in a case that the actual entire-vehicle state of the vehicle is the first fixed state and the actual shifter state is the second fixed state, determine, according to a preset first shift strategy set for reflecting shift strategies respectively corresponding to respective entire-vehicle states under the first fixed state and for reflecting shift strategies respectively corresponding to respective shifter states under the second fixed state, a first actual shift strategy corresponding to the actual entire-vehicle state and the actual shifter state, and determine a current gear of the vehicle based on the first actual shift strategy; and
   in a case that the actual entire-vehicle state is the first change state and/or the actual shifter state is the second change state, determine, according to a preset second shift strategy set for reflecting shift strategies respectively corresponding to change situations of respective entire-vehicle states under the first change state and/or for reflecting shift strategies respectively corresponding to change situations of respective shifter states under the second change state, a second actual shift strategy corresponding to the change situation of the actual entire-vehicle state and/or the change situation of the actual shifter state, and determine a current gear of the vehicle based on the second actual shift strategy.

Further, the respective entire-vehicle states include: a low-voltage state, a charging state, or a high-voltage state;
the first actual shift strategy performed by the gear control module 30 is configured as:
setting the current gear of the vehicle to a neutral gear, in a case that the actual entire-vehicle state is the low-voltage state or the charging state;
acquiring a vehicle speed value and determining the current gear of the vehicle according to the vehicle speed value and the actual shifter state, in a case that the actual entire-vehicle state is the high-voltage state.

Further, the respective shifter states include: a fault state in which a shifter is identified to be failed, and a normal state in which the shifter is identified to be normal;
the determining, by the gear control module 30, the current gear of the vehicle according to the vehicle speed value and the actual shifter state includes:
in a case of determining that the actual shifter state is the fault state,
   set the current gear of the vehicle as a neutral gear;
in a case of determining that the actual shifter state is the normal state,
   acquire a shifter gear and set the current gear of the vehicle as the shifter gear, in a case where it is determined that the vehicle speed value is less than or equal to the preset vehicle speed threshold;
   in a case where it is determined that the vehicle speed value is greater than the preset vehicle speed threshold, set the current gear of the vehicle to the neutral gear, until the vehicle speed value is less than or equal to the vehicle speed threshold, and then acquire the shifter gear and set the current gear of the vehicle as the shifter gear.

Further, the change situations of the respective entire-vehicle states include: a mutual change between a low-voltage state and a high-voltage state, and a transition from a non-charging state to a charging state;
the second actual shift strategy performed by the gear control module 30 is configured as:
in a case where the change situation of the actual entire-vehicle state is a mutual change between the low-voltage state and the high-voltage state,
   setting the current gear of the vehicle to a neutral gear;
in a case that the change situation of the actual entire-vehicle state is from the non-charging state to the charging state,
   setting the current gear of the vehicle as the neutral gear, and switching the current gear of the vehicle from the neutral gear to a parking gear after a lock signal is acquired.

Further, the change situations of the respective shifter states may include: a transition from a fault state to a normal state, and a transition from a normal state to a fault state;
the second actual shift strategy performed by the gear control module 30 is configured as:
in a case where the change situation of the actual shifter state is from a fault state to a normal state, maintaining the current gear of the vehicle;
in a case where the change situation of the actual shifter state is from a normal state to a fault state, acquiring a vehicle speed value and an actual gear in a normal state prior to the fault state, and determining the current gear of the vehicle according to the vehicle speed value and the actual gear in the normal state prior to the fault state.

Further, the determining, by the gear control module 30, the current gear of the vehicle according to the vehicle speed value and the actual gear in the normal state prior to the fault state includes:
determine whether the vehicle speed value is less than or equal to a preset vehicle speed threshold,
switch the current gear of the vehicle to the neutral gear, if it is determined that the vehicle speed value is less than or equal to the preset vehicle speed threshold;
if it is determined that the vehicle speed value is greater than the preset vehicle speed threshold,
   in a case that the actual gear in the normal state prior to the fault state is a reverse gear or a neutral gear, set the current gear of the vehicle to the neutral gear;
   in a case that the actual gear in the normal state prior to the fault state is a drive gear, set the current gear of the vehicle to the drive gear.

Further, the gear determination system may further include:
an electronic parking controller, configured to acquire an actual parking state in real time;
the gear control module 30 is configured to set the current gear of the vehicle as a parking gear, if the actual parking state is determined as a locked state.

Compared with the conventional technology, this embodiment has the same effects as the above first embodiment to fifth embodiment, which will not be repeated herein.

An embodiment of a vehicle is further included in the present invention. The vehicle may include the gear control system according to the sixth embodiment described above.

Compared with the conventional technology, this embodiment has the same effects as the first embodiment to sixth embodiment described above, which will not be repeated herein.

## Claims

1. A gear determination method comprising:
acquire an actual entire-vehicle state of an vehicle, wherein the respective entire-vehicle states, representing fixed states, comprise: a low-voltage state, a charging state, or a high-voltage state,
wherein change situations of the respective entire-vehicle states comprise: a mutual change between a low-voltage state and a high-voltage state, and a transition from a non-charging state to a charging state;
determine whether the actual entire-vehicle state of the vehicle is a first fixed state or a first change state, and acquire a change situation of the actual entire-vehicle state when the actual entire-vehicle state of the vehicle is the first change state;
acquire an actual shifter state, wherein the respective shifter states, representing fixed states, comprise: a fault state in which an electronic shifter is identified to be failed, and a normal state in which the electronic shifter is identified to be normal;
wherein the change situations of the respective shifter states comprise: a transition from a fault state to a normal state, and a transition from a normal state to a fault state;
determine whether the actual shifter state is a second fixed state or a second change state, and acquire a change situation of the actual shifter state when the actual shifter state is the second change state;
in a case that the actual entire-vehicle state is the first fixed state and the actual shifter state is the second fixed state, determine, according to a preset first shift strategy set for reflecting shift strategies respectively corresponding to respective entire-vehicle states under the first fixed state and for reflecting shift strategies respectively corresponding to respective shifter states under the second fixed state, a first actual shift strategy corresponding to the actual entire-vehicle state and the actual shifter state, and determine a current gear of the vehicle based on the first actual shift strategy; and
in a case that the actual entire-vehicle state is the first change state and/or the actual shifter state is the second change state, determine, according to a preset second shift strategy set for reflecting shift strategies respectively corresponding to change situations of respective entire-vehicle states under the first change state and/or for reflecting shift strategies respectively corresponding to change situations of respective shifter states under the second change state, a second actual shift strategy corresponding to the change situation of the actual entire-vehicle state and/or the change situation of the actual shifter state, and determine a current gear of the vehicle based on the second actual shift strategy.

2. The gear determination method according to claim 1,;
wherein the first actual shift strategy is configured as:
setting the current gear of the vehicle to a neutral gear, in a case that the actual entire-vehicle state is the low-voltage state or the charging state; and
acquiring a vehicle speed value and determining the current gear of the vehicle according to the vehicle speed value and the actual shifter state, in a case that the actual entire-vehicle state is the high-voltage state.

3. The gear determination method according to claim 2,
wherein the determining the current gear of the vehicle according to the vehicle speed value and the actual shifter state comprises:
in a case of determining that the actual shifter state is the fault state,
maintaining the current gear of the vehicle, in a case where it is determined that the vehicle speed value is greater than a preset vehicle speed threshold and the current gear of the vehicle is a drive gear;
setting the current gear of the vehicle as a neutral gear, in a case where it is determined that the vehicle speed is greater than the preset vehicle speed threshold and the current gear of the vehicle is a neutral gear or a reverse gear;
setting the current gear of the vehicle as a neutral gear, in a case where it is determined that the vehicle speed value is less than or equal to the preset vehicle speed threshold;
in a case of determining that the actual shifter state is the normal state,
acquiring a shifter gear and setting the current gear of the vehicle as the shifter gear, in a case where it is determined that the vehicle speed value is less than or equal to the preset vehicle speed threshold;
in a case where it is determined that the vehicle speed value is greater than the preset vehicle speed threshold, setting the current gear of the vehicle to the neutral gear, until the vehicle speed value is less than or equal to the vehicle speed threshold, and then acquiring the shifter gear and setting the current gear of the vehicle as the shifter gear.

4. The gear determination method according to claim 1,
wherein, the second actual shift strategy is configured as:
setting the current gear of the vehicle to a neutral gear, in a case where the change situation of the actual entire-vehicle state is a mutual change between the low-voltage state and the high-voltage state;
in a case that the change situation of the actual entire-vehicle state is from the non-charging state to the charging state,
setting the current gear of the vehicle as the neutral gear, and switching the current gear of the vehicle from the neutral gear to a parking gear after a lock signal is acquired.

5. The gear determination method according to claim 1,
wherein, the second actual shift strategy is configured as:
in a case where the change situation of the actual shifter state is from a fault state to a normal state, maintaining the current gear of the vehicle;
in a case where the change situation of the actual shifter state is from a normal state to a fault state, acquiring a vehicle speed value and an actual gear in a normal state prior to the fault state, and determining the current gear of the vehicle according to the vehicle speed value and the actual gear in the normal state prior to the fault state.

6. The gear determination method according to claim 5, wherein the determining the current gear of the vehicle according to the vehicle speed value and the actual gear in the normal state prior to the fault state comprises:
determining whether the vehicle speed value is less than or equal to a preset vehicle speed threshold,
switching the current gear of the vehicle to the neutral gear, if it is determined that the vehicle speed value is less than or equal to the preset vehicle speed threshold;
if it is determined that the vehicle speed value is greater than the preset vehicle speed threshold,
in a case that the actual gear in the normal state prior to the fault state is a reverse gear or a neutral gear, setting the current gear of the vehicle to the neutral gear;
in a case that the actual gear in the normal state prior to the fault state is a drive gear, setting the current gear of the vehicle to the drive gear.

7. The gear determination method according to any one of claims 1-6, further comprising:
acquiring an actual parking state in real time; and
setting the current gear of the vehicle as a parking gear, if the actual parking state is determined as a locked state.

8. A gear determination system comprising:
an entire-vehicle state controller, configured to acquire an actual entire-vehicle state of an electric vehicle, wherein the respective entire-vehicle states, representing fixed states, comprise: a low-voltage state, a charging state, or a high-voltage state, wherein change situations of the respective entire-vehicle states comprise: a mutual change between a low-voltage state and a high-voltage state, and a transition from a non-charging state to a charging state; said entire-vehicle state controller configured to determine whether the actual entire-vehicle state of the vehicle is a first fixed state or a first change state, and acquire a change situation of the actual entire-vehicle state when the actual entire-vehicle state of the vehicle is the first change state;
an electronic shifter, configured to acquire an actual shifter state, wherein the respective shifter states, representing fixed states, comprise: a fault state in which the electronic shifter is identified to be failed, and a normal state in which the electronic shifter is identified to be normal; wherein the change situations of the respective shifter states comprise: a transition from a fault state to a normal state, and a transition from a normal state to a fault state; wherein said electronic shifter configured to determine whether the actual shifter state is a second fixed state or a second change state, and acquire a change situation of the actual shifter state when the actual shifter state is the second change state; and
a gear control module, configured to:
in a case that the actual entire-vehicle state of the vehicle is the first fixed state and the actual shifter state is the second fixed state, determine, according to a preset first shift strategy set for reflecting shift strategies respectively corresponding to respective entire-vehicle states under the first fixed state and for reflecting shift strategies respectively corresponding to respective shifter states under the second fixed state, a first actual shift strategy corresponding to the actual entire-vehicle state and the actual shifter state, and determine a current gear of the vehicle based on the first actual shift strategy; and
in a case that the actual entire-vehicle state is the first change state and/or the actual shifter state is the second change state, determine, according to a preset second shift strategy set for reflecting shift strategies respectively corresponding to change situations of respective entire-vehicle states under the first change state and/or for reflecting shift strategies respectively corresponding to change situations of respective shifter states under the second change state, a second actual shift strategy corresponding to the change situation of the actual entire-vehicle state and/or the change situation of the actual shifter state, and determine a current gear of the vehicle based on the second actual shift strategy.

9. The gear determination system according to claim 8, wherein the gear determination system further comprises:
an electronic parking controller, configured to acquire an actual parking state in real time and transmit the actual parking state to the gear control module;
wherein the gear control module is configured to set the current gear of the vehicle as a parking gear, if the actual parking state is determined as a locked state.

10. A vehicle, **characterized by** comprising the gear determination system according to any one of claims 8 and 9.

## Patentansprüche

1. Gangbestimmungsverfahren, das umfasst:
Erfassen eines Ist-Gesamtfahrzeugzustands eines Elektrofahrzeugs, wobei die jeweiligen Gesamtfahrzeugzustände, die festgelegte Zustände darstellen, umfassen: einen Niederspannungszustand, einen Ladezustand, oder einen Hochspannungszustand,
wobei die Wechselsituationen der jeweiligen Gesamtfahrzeugzustände umfasst: einen gegenseitigen Wechsel zwischen einem Niederspannungszustand und einem Hochspannungszustand, und einen Übergang von einem Nicht-Ladezustand in einen Ladezustand;
Bestimmen, ob der Ist-Gesamtfahrzeugzustand des Fahrzeugs ein erster festgelegter Zustand oder einer erster Wechselzustand ist, und Erfassen einer Wechselsituation des Ist-Gesamtfahrzeugzustands, wenn der Ist-Gesamtfahrzeugzustand des Fahrzeugs in dem ersten Wechselzustand ist;
Erfassen eines Ist-Gangschaltungszustands, wobei die jeweiligen Gangschaltungszustände, die festgelegte Zustände darstellen, umfassen: einen Fehlerzustand, in dem eine elektronische Gangschaltung als ausgefallen identifiziert wird, und einen Normalzustand, in dem die elektronische Gangschaltung als normal identifiziert wird;
wobei die Wechselsituationen der jeweiligen Gangschaltungszustände umfassen: einen Übergang von einem Fehlerzustand in einen Normalzustand, und einen Übergang von einem Normalzustand in einen Fehlerzustand;
Bestimmen, ob der Ist-Gangschaltungszustand ein zweiter festgelegter Zustand oder ein zweiter Wechselzustand ist, und Erfassen einer Wechselsituation des Ist-Gangschaltungszustands, wenn der Ist-Gangschaltungszustand in dem zweiten Wechselzustand ist;
in dem Fall, dass der Ist-Gesamtfahrzeugzustand der erste festgelegte Zustand ist und der Ist-Gangschaltungszustand der zweite festgelegte Zustand ist, Bestimmen, entsprechend einem voreingestellten ersten Schaltstrategiesatz zur Widerspiegelung von Schaltstrategien, die jeweils den jeweiligen Gesamtfahrzeugzuständen unter dem ersten festgelegten Zustand entsprechen, und zur Widerspiegelung von Schaltstrategien, die jeweils den jeweiligen Schaltzuständen unter dem zweiten festgelegten Zustand entsprechen, einer ersten Ist-Schaltstrategie, die dem Ist-Gesamtfahrzeugzustand und dem Ist-Gangschaltungszustand entspricht, und Bestimmen eines aktuellen Gangs des Fahrzeugs basierend auf der ersten Ist-Schaltstrategie; und
in dem Fall, dass der Ist-Gesamtfahrzeugzustand der erste Wechselzustand ist und/oder der Ist-Gangschaltungszustand der zweite Wechselzustand ist, Bestimmen, entsprechend einem voreingestellten zweiten Schaltstrategiesatz zur Widerspiegelung von Schaltstrategien, die jeweils den Wechselsituationen der jeweiligen Gesamtfahrzeugzustände unter dem ersten Wechselzustand entsprechen, und/oder zur Widerspiegelung von Schaltstrategien, die jeweils den Wechselsituationen der jeweiligen Schaltzustände unter dem zweiten Wechselzustand entsprechen, einer zweiten Ist-Schaltstrategie, die der Wechselsituation des Ist-Gesamtfahrzeugzustands und/oder der Wechselsituation des Ist-Gangschaltungszustands entspricht, und Bestimmen eines aktuellen Gangs des Fahrzeugs basierend auf der zweiten Ist-Schaltstrategie.

2. Gangbestimmungsverfahren nach Anspruch 1, wobei die erste Ist-Schaltstrategie wie folgt ausgebildet ist:
Einstellen des aktuellen Gangs des Fahrzeugs auf einen Neutralgang, in dem Fall, dass der Ist-Gesamtfahrzeugzustand der Niederspannungszustand oder der Ladezustand ist; und
Erfassen eines Fahrzeuggeschwindigkeitswerts und Bestimmen des aktuellen Gangs des Fahrzeugs entsprechend dem Fahrzeuggeschwindigkeitswert und dem Ist-Gangschaltungszustand, in dem Fall, dass der Ist-Gesamtfahrzeugzustand der Hochspannungszustand ist.

3. Gangbestimmungsverfahren nach Anspruch 2, wobei das Bestimmen des aktuellen Gangs des Fahrzeugs entsprechend dem Fahrzeuggeschwindigkeitswert und dem Ist-Gangschaltungszustand umfasst:
in dem Fall, dass bestimmt wird, dass der Ist-Gangschaltungszustand der Fehlerzustand ist,
Beibehalten des aktuellen Gangs des Fahrzeugs, in dem Fall, das bestimmt wird, dass der Fahrzeuggeschwindigkeitswert größer als ein vorbestimmter Fahrzeuggeschwindigkeitsschwellenwert ist und der aktuelle Gang des Fahrzeugs ein Fahrgang ist;
Einstellen des aktuellen Gangs des Fahrzeugs als Neutralgang, in dem Fall, dass bestimmt wird, dass die Fahrzeuggeschwindigkeit größer als der voreingestellte Fahrzeuggeschwindigkeitsschwellenwert ist und der aktuelle Gang des Fahrzeugs ein Neutralgang oder ein Rückwärtsgang ist;
Einstellen des aktuellen Gangs des Fahrzeugs als Neutralgang, in dem Fall, dass bestimmt wird, dass der Fahrzeuggeschwindigkeitswert kleiner als der oder gleich dem voreingestellte Fahrzeuggeschwindigkeitsschwellenwert ist;
in dem Fall, dass bestimmt wird, dass der Ist-Gangschaltungszustand der Normalzustand ist,
Erfassen eines Gangschaltungsgangs und Einstellen des aktuellen Gangs des Fahrzeugs als Gangschaltungsgang, in dem Fall, dass bestimmt wird, dass der Fahrzeuggeschwindigkeitswert kleiner als der oder gleich dem voreingestellten Fahrzeuggeschwindigkeitsschwellenwert ist;
in dem Fall, dass bestimmt wird, dass der Fahrzeuggeschwindigkeitswert größer als der voreingestellte Fahrzeuggeschwindigkeitsschwellenwert ist, Einstellen des aktuellen Gangs des Fahrzeugs auf den Neutralgang bis der Fahrzeuggeschwindigkeitswert kleiner als der oder gleich dem Fahrzeuggeschwindigkeitsschwellenwert ist, und dann Erfassen des Gangschaltungsgangs und Einstellen des aktuellen Gangs des Fahrzeugs als Gangschaltungsgang.

4. Gangbestimmungsverfahren nach Anspruch 1, wobei die zweite Ist-Gangschaltungsstrategie wie folgt ausgebildet ist:
Einstellen des aktuellen Gangs des Fahrzeugs auf einen Neutralgang, in dem Fall, dass der Wechselzustand des Ist-Gesamtfahrzeugzustands ein gegenseitiger Wechsel zwischen dem Niederspannungszustand und dem Hochspannungszustand ist;
in dem Fall, dass die Wechselsituation des Ist-Gesamtfahrzeugzustands von dem Nicht-Ladezustand in den Ladezustand ist,
Einstellen der aktuellen Gangs des Fahrzeugs auf den Neutralgang, und Schalten des aktuellen Gangs des Fahrzeugs von dem Neutralgang in den Parkgang nach Erfassen eines Verriegelungssignals.

5. Gangbestimmungsverfahren nach Anspruch 1, wobei die zweite Ist-Gangschaltungsstrategie wie folgt ausgebildet ist:
in dem Fall, dass die Wechselsituation des Ist-Gangschaltungszustands von einem Fehlerzustand in einen Normalzustand ist, Beibehalten des aktuellen Gangs des Fahrzeugs;
in dem Fall, dass die Wechselsituation des Ist-Gangschaltungszustands von einem Normalzustand in einen Fehlerzustand ist, Erfassen eines Fahrzeuggeschwindigkeitswerts und eines Ist-Gangs in einem Normalzustand vor dem Fehlerzustand, und Bestimmen des aktuellen Gangs des Fahrzeugs entsprechend dem Fahrzeuggeschwindigkeitswert und dem Ist-Gang im Normalzustand vor dem Fehlerzustand.

6. Gangbestimmungsverfahren nach Anspruch 5, wobei das Bestimmen des aktuellen Gangs des Fahrzeugs entsprechend dem Fahrzeuggeschwindigkeitswert und dem aktuellen Gang im Normalzustand vor dem Fehlerzustand umfasst:
Bestimmen, ob der Fahrzeuggeschwindigkeitswert kleiner als der oder gleich dem voreingestellten Fahrzeuggeschwindigkeitsschwellenwert ist,
Schalten des aktuellen Gangs des Fahrzeugs in den Neutralgang, wenn bestimmt wird, dass der Fahrzeuggeschwindigkeitswert kleiner als der oder gleich dem voreingestellten Fahrzeuggeschwindigkeitsschwellenwert ist;
wenn bestimmt wird, dass der Fahrzeuggeschwindigkeitswert größer als der voreingestellte Fahrzeuggeschwindigkeitsschwellenwert ist,
in dem Fall, dass der Ist-Gang im Normalzustand vor dem Fehlerzustand ein Rückwärtsgang oder ein Neutralgang ist, Einstellen des aktuellen Gangs des Fahrzeugs auf den Neutralgang;
in dem Fall, dass der aktuelle Gang im Normalzustand vor dem Fehlerzustand ein Fahrgang ist, Einstellen des aktuelles Gangs des Fahrzeugs auf den Fahrgang.

7. Gangbestimmungsverfahren nach einem der Ansprüche 1-6, das ferner umfasst:
Erfassen eines Ist-Parkzustands in Echtzeit; und
Einstellen des aktuellen Gangs des Fahrzeugs als einen Parkgang, wenn der Ist-Parkzustand als verriegelter Zustand bestimmt wird.

8. Gangbestimmungssystem, das umfasst:
eine Gesamtfahrzeugzustandssteuerung, die dazu ausgebildet ist, einen Ist-Gesamtfahrzeugzustand eines Elektrofahrzeugs zu erfassen, wobei die jeweiligen Gesamtfahrzeugzustände, die festgelegte Zustände darstellen, umfassen: einen Niederspannungszustand, einen Ladezustand, oder einen Hochspannungszustand, wobei die Wechselsituationen der jeweiligen Gesamtfahrzeugzustände umfassen: einen gegenseitigen Wechsel zwischen einem Niederspannungszustand und einem Hochspannungszustand, und einen Übergang von einem Nicht-Ladezustand in einen Ladezustand; wobei die Gesamtfahrzeugzustandssteuerung dazu ausgebildet ist, zu bestimmen, ob der Ist-Gesamtfahrzeugzustand des Fahrzeugs ein erster festgelegter Zustand oder einer erster Wechselzustand ist, und eine Wechselsituation des Ist-Gesamtfahrzeugzustands zu erfassen, wenn der Ist-Gesamtfahrzeugzustand des Fahrzeugs der erste Wechselzustand ist;
eine elektronische Gangschaltung, die dazu ausgebildet ist, einen Ist-Gangschaltungszustand zu erfassen, wobei die jeweiligen Gangschaltungszustände, die festgelegte Zustände darstellen, umfassen: einen Fehlerzustand, in dem eine elektronische Gangschaltung als ausgefallen identifiziert wird, und einen Normalzustand, in dem die elektronische Gangschaltung als normal identifiziert wird;
wobei die Wechselsituationen der jeweiligen Gangschaltungszustände umfassen: einen Übergang von einem Fehlerzustand in einen Normalzustand, und einen Übergang von einem Normalzustand in einen Fehlerzustand;
wobei die elektronische Gangschaltung dazu ausgebildet ist, zu bestimmen, ob der Ist-Gangschaltungszustand ein zweiter festgelegter Zustand oder ein zweiter Wechselzustand ist, und eine Wechselsituation des Ist-Gangschaltungszustands zu erfassen, wenn der Ist-Gangschaltungszustand der zweite Wechselzustand ist; und
ein Gangsteuerungsmodul, das für Folgendes ausgebildet ist:
in dem Fall, dass der Ist-Gesamtfahrzeugzustand des Fahrzeugs der erste festgelegte Zustand ist und der Ist-Gangschaltungszustands der zweite festgelegte Zustand ist, Bestimmen, entsprechend einem voreingestellten ersten Schaltstrategiesatz zur Widerspiegelung von Schaltstrategien, die jeweils den jeweiligen Gesamtfahrzeugzuständen unter dem ersten festgelegten Zustand entsprechen, und zur Widerspiegelung von Schaltstrategien, die jeweils den jeweiligen Schaltzuständen unter dem zweiten festgelegten Zustand entsprechen, einer ersten Ist-Schaltstrategie, die dem Ist-Gesamtfahrzeugzustand und dem Ist-Gangschaltungszustand entspricht, und Bestimmen eines aktuellen Gangs des Fahrzeugs basierend auf der ersten Ist-Schaltstrategie; und
in dem Fall, dass der Ist-Gesamtfahrzeugzustand der erste Wechselzustand ist und/oder der Ist-Gangschaltungszustand der zweite Wechselzustand ist, Bestimmen, entsprechend einem voreingestellten zweiten Schaltstrategiesatz zur Widerspiegelung von Schaltstrategien, die jeweils den Wechselsituationen der jeweiligen Gesamtfahrzeugzustände unter dem ersten Wechselzustand entsprechen, und/oder zur Widerspiegelung von Schaltstrategien, die jeweils den Wechselsituationen der jeweiligen Schaltzustände unter dem zweiten Wechselzustand entsprechen, einer zweiten Ist-Schaltstrategie, die der Wechselsituation des Ist-Gesamtfahrzeugzustands und/oder der Wechselsituation des Ist-Gangschaltungszustands entspricht, und Bestimmen eines aktuellen Gangs des Fahrzeugs basierend auf der zweiten Ist-Schaltstrategie.

9. Gangbestimmungssystem nach Anspruch 8, wobei das Gangbestimmungssystem ferner aufweist:
eine elektronische Parksteuerung, die dazu ausgebildet ist, einen Ist-Parkzustand in Echtzeit zu erfassen und den Ist-Parkzustand an das Gangsteuerungsmodul zu übertragen;
wobei das Gangsteuerungsmodul dazu ausgebildet ist, den aktuellen Gang des Fahrzeugs als einen Parkgang einzustellen, wenn der Ist-Parkzustand als verriegelter Zustand bestimmt wird.

10. Fahrzeug, **dadurch gekennzeichnet, dass** es das Gangbestimmungssystem nach einem der Ansprüche 8 und 9 aufweist.

## Revendications

1. Procédé de détermination de rapport comprenant :
l'acquisition d'un état réel d'ensemble de véhicule d'un véhicule électrique, dans lequel les états respectifs d'ensemble de véhicule, représentant des états fixes, comprennent : un état de basse tension, un état de charge, ou un état de haute tension,
dans lequel des situations de changement des états respectifs d'ensemble de véhicule comprennent : un changement mutuel entre un état de basse tension et un état de haute tension, et une transition d'un état de non-charge à un état de charge ;
le fait de déterminer si l'état réel d'ensemble de véhicule du véhicule est un premier état fixe ou un premier état de changement, et l'acquisition d'une situation de changement de l'état réel d'ensemble de véhicule lorsque l'état réel d'ensemble de véhicule est le premier état de changement ;
l'acquisition d'un état réel de levier de vitesses, dans lequel les états respectifs de levier de vitesses, représentant des états fixes, comprennent : un état de défaut dans lequel un levier de vitesses électronique est identifié comme étant en panne, et un état normal dans lequel le levier de vitesses électronique est identifié comme étant normal ;
dans lequel les situations de changement des états respectifs de levier de vitesses comprennent : une transition d'un état de défaut à un état normal, et une transition d'un état normal à un état de défaut ;
le fait de déterminer si l'état réel de levier de vitesses est un second état fixe ou un second état de changement, et l'acquisition d'une situation de changement de l'état réel de levier de vitesses lorsque l'état réel de levier de vitesses est le second état de changement ;
dans le cas où l'état réel d'ensemble de véhicule est le premier état fixe et l'état réel de levier de vitesses est le second état fixe, la détermination, selon un premier ensemble de stratégies de changement de vitesse prédéfini pour refléter des stratégies de changement de vitesse correspondant respectivement à des états respectifs d'ensemble de véhicule dans le premier état fixe et pour refléter des stratégies de changement de vitesse correspondant respectivement à des états respectifs de levier de vitesses dans le second état fixe, d'une première stratégie de changement de vitesse réelle correspondant à l'état réel d'ensemble de véhicule et à l'état réel de levier de vitesses, et la détermination d'un rapport actuel du véhicule sur la base de la première stratégie de changement de vitesse réelle ; et
dans le cas où l'état réel d'ensemble de véhicule est le premier état de changement et/ou l'état réel de levier de vitesses est le second état de changement, la détermination, selon un second ensemble de stratégies de changement de vitesse prédéfini pour refléter des stratégies de changement de vitesse correspondant respectivement à des situations de changement d'états respectifs d'ensemble de véhicule dans le premier état de changement et/ou pour refléter des stratégies de changement de vitesse correspondant respectivement à des situations de changement d'états respectifs de levier de vitesses dans le second état de changement, d'une seconde stratégie de changement de vitesse réelle correspondant à la situation de changement de l'état réel d'ensemble de véhicule et/ou à la situation de changement de l'état réel de levier de vitesses, et la détermination d'un rapport actuel du véhicule sur la base de la seconde stratégie de changement de vitesse réelle.

2. Procédé de détermination de rapport selon la revendication 1,
dans lequel la première stratégie de changement de vitesse réelle est configurée comme :
le réglage du rapport actuel du véhicule à un point mort, dans le cas où l'état réel d'ensemble de véhicule est l'état de basse tension ou l'état de charge ; et
l'acquisition d'une valeur de vitesse de véhicule et la détermination du rapport actuel du véhicule selon la valeur de vitesse de véhicule et de l'état réel de levier de vitesses, dans le cas où l'état réel d'ensemble de véhicule est l'état de haute tension.

3. Procédé de détermination de rapport selon la revendication 2,
dans lequel la détermination du rapport actuel du véhicule selon la valeur de vitesse de véhicule et de l'état réel de levier de vitesses comprend :
dans le cas où il est déterminé que l'état réel de levier de vitesses est l'état de défaut,
le maintien du rapport actuel du véhicule, dans le cas où il est déterminé que la valeur de vitesse de véhicule est supérieure à un seuil de vitesse de véhicule prédéfini et que le rapport actuel du véhicule est un rapport d'entraînement ;
le réglage du rapport actuel du véhicule en tant que point mort, dans le cas où il est déterminé que la vitesse de véhicule est supérieure au seuil de vitesse de véhicule prédéfini et que le rapport actuel du véhicule est un point mort ou une marche arrière ;
le réglage du rapport actuel du véhicule en tant que point mort, dans le cas où il est déterminé que la valeur de vitesse de véhicule est inférieure ou égale au seuil de vitesse de véhicule prédéfini ;
dans le cas où il est déterminé que l'état réel de levier de vitesse est l'état normal,
l'acquisition d'un rapport de levier de vitesses et le réglage du rapport actuel du véhicule en tant que rapport de levier de vitesses, dans le cas où il est déterminé que la valeur de vitesse de véhicule est inférieure ou égale au seuil de vitesse de véhicule prédéfini ;
dans le cas où il est déterminé que la valeur de vitesse de véhicule est supérieure au seuil de vitesse de véhicule prédéfini, le réglage du rapport actuel du véhicule au point mort, jusqu'à ce que la valeur de vitesse de véhicule soit inférieure ou égale au seuil de vitesse de véhicule, puis l'acquisition du rapport de levier de vitesses et le réglage du rapport actuel du véhicule en tant que rapport de levier de vitesses.

4. Procédé de détermination de rapport selon la revendication 1,
dans lequel la seconde stratégie de changement de vitesse réelle est configurée comme :
le réglage du rapport actuel du véhicule sur un point mort, dans le cas où la situation de changement de l'état réel d'ensemble de véhicule est un changement mutuel entre l'état de basse tension et l'état de haute tension ;
dans le cas où la situation de changement de l'état réel d'ensemble de véhicule passe de l'état de non-charge à l'état de charge,
le réglage du rapport actuel du véhicule en tant que point mort, et la commutation du rapport actuel du véhicule du point mort à un rapport de stationnement après l'acquisition d'un signal de verrouillage.

5. Procédé de détermination de rapport selon la revendication 1,
dans lequel la seconde stratégie de changement de vitesse réelle est configurée comme :
dans le cas où la situation de changement de l'état réel de levier de vitesses passe d'un état de défaut à un état normal, le maintien du rapport actuel du véhicule ;
dans le cas où la situation de changement de l'état réel de levier de vitesses passe d'un état normal à un état de défaut, l'acquisition d'une valeur de vitesse de véhicule et d'un rapport réel dans un état normal avant l'état de défaut, et la détermination du rapport actuel du véhicule selon la valeur de vitesse de véhicule et du rapport réel dans l'état normal avant l'état de défaut.

6. Procédé de détermination de rapport selon la revendication 5, dans lequel la détermination du rapport actuel du véhicule selon la valeur de vitesse du véhicule et du rapport réel dans l'état normal avant l'état de défaut comprend :
le fait de déterminer si la valeur de vitesse de véhicule est inférieure ou égale à un seuil de vitesse de véhicule prédéfini,
la commutation du rapport actuel du véhicule au point mort, s'il est déterminé que la valeur de vitesse de véhicule est inférieure ou égale au seuil de vitesse de véhicule prédéfini ;
s'il est déterminé que la valeur de vitesse de véhicule est supérieure au seuil de vitesse de véhicule prédéfini,
dans le cas où le rapport réel dans l'état normal avant l'état de défaut est une marche arrière ou un point mort, le réglage du rapport actuel du véhicule au point mort ;
dans le cas où le rapport réel dans l'état normal avant l'état de défaut est un rapport d'entraînement, le réglage du rapport actuel du véhicule sur le rapport d'entraînement.

7. Procédé de détermination de rapport selon l'une quelconque des revendications 1 à 6, comprenant en outre :
l'acquisition d'un état de stationnement réel en temps réel ; et
le réglage du rapport actuel du véhicule en tant que rapport de stationnement, si l'état de stationnement réel est déterminé comme étant un état verrouillé.

8. Système de détermination de rapport comprenant :
un dispositif de commande d'état d'ensemble de véhicule, configuré pour acquérir un état réel d'ensemble de véhicule d'un véhicule électrique, dans lequel les états respectifs d'ensemble de véhicule, représentant des états fixes, comprennent : un état de basse tension, un état de charge, ou un état de haute tension, dans lequel des situations de changement des états de respectifs d'ensemble de véhicule comprennent : un changement mutuel entre un état de basse tension et un état de haute tension, et une transition d'un état de non-charge à un état de charge ; ledit dispositif de commande d'état d'ensemble de véhicule étant configuré pour déterminer si l'état réel d'ensemble de véhicule du véhicule est un premier état fixe ou un premier état de changement, et acquérir une situation de changement de l'état réel d'ensemble de véhicule lorsque l'état réel d'ensemble de véhicule est le premier état de changement ;
un levier de vitesses électronique, configuré pour acquérir un état réel de levier de vitesses, dans lequel les états respectifs de levier de vitesses, représentant des états fixes, comprennent : un état de défaut dans lequel le levier de vitesses électronique est identifié comme étant en panne, et un état normal dans lequel le levier de vitesses électronique est identifié comme étant normal ; dans lequel les situations de changement des états respectifs de levier de vitesses comprennent : une transition d'un état de défaut à un état normal, et une transition d'un état normal à un état de défaut ; dans lequel ledit levier de vitesses électronique est configuré pour déterminer si l'état réel de levier de vitesses est un second état fixe ou un second état de changement, et acquérir une situation de changement de l'état réel de levier de vitesses lorsque l'état réel de levier de vitesses est le second état de changement ; et
un module de commande de rapport, configuré pour :
dans le cas où l'état réel d'ensemble de véhicule du véhicule est le premier état fixe et l'état réel de levier de vitesses est le second état fixe, la détermination, selon un premier ensemble de stratégies de changement de vitesse prédéfini pour refléter des stratégies de changement de vitesse correspondant respectivement à des états respectifs d'ensemble de véhicule dans le premier état fixe et pour refléter des stratégies de changement de vitesse correspondant respectivement à des états respectifs de levier de vitesses dans le second état fixe, d'une première stratégie de changement de vitesse réelle correspondant à l'état réel d'ensemble de véhicule et à l'état réel de levier de vitesses, et la détermination d'un rapport actuel du véhicule sur la base de la première stratégie de changement de vitesse réelle ; et
dans le cas où l'état réel d'ensemble de véhicule est le premier état de changement et/ou l'état réel de levier de vitesses est le second état de changement, la détermination, selon un second ensemble de stratégies de changement de vitesse prédéfini pour refléter des stratégies de changement de vitesse correspondant respectivement à des situations de changement d'états respectifs d'ensemble de véhicule dans le premier état de changement et/ou pour refléter des stratégies de changement de vitesse correspondant respectivement à des situations de changement d'états respectifs de levier de vitesses dans le second état de changement, d'une seconde stratégie de changement de vitesse réelle correspondant à la situation de changement de l'état réel d'ensemble de véhicule et/ou à la situation de changement de l'état réel de levier de vitesses, et la détermination d'un rapport actuel du véhicule sur la base de la seconde stratégie de changement de vitesse réelle.

9. Système de détermination de rapport selon la revendication 8, dans lequel le système de détermination de rapport comprend en outre :
un dispositif de commande de stationnement électronique, configuré pour acquérir un état de stationnement réel en temps réel et transmettre l'état de stationnement réel au module de commande de rapport ;
dans lequel le module de commande de rapport est configuré pour régler le rapport actuel du véhicule en tant que rapport de stationnement, si l'état de stationnement réel est déterminé comme étant un état verrouillé.

10. Véhicule, **caractérisé par le fait qu'**il comprend le système de détermination de rapport selon l'une quelconque des revendications 8 et 9.
